# EUROPEAN PATENT APPLICATION

(11) **EP 4 756 734 A1**
(43) Date of publication of application: **10.06.2026**
(21) Application number: 24217551.1
(22) Date of filing: 04.12.2024
(51) Int. Cl.: G06V 10/771, G06V 10/774, G06V 10/82, G06V 20/56

(54) **METHOD OF TESTING AN ELECTRONIC CONTROL UNIT**

(71) Applicant: dSPACE SE & Co. KG, 33102 Paderborn (DE)
(72) Inventor: Bhatt, Hitarth, 33102 Paderborn (DE); Burdorf, Sven, 33102 Paderborn (DE)

(57) **Abstract**

Disclosed is a method of testing an ECU (302) comprising an automated control module (304) adapted for controlling components of a vehicle. The method comprises receiving (200) a collection of joint embedding space vectors (122, 122') configured to encode a sensor data stream comprising sequential traffic images and a text scene descriptor. The method further comprises receiving (202) a selection of a joint embedding space vector (124) different from the collection of joint embedding space vectors. The method further comprises receiving (204) a generated text descriptor (128) in response to inputting the selected joint embedding space vector into a joint embedding space vector decoder model. The method further comprises receiving (206) a generated sequence of traffic images (132) in response to inputting the generated text descriptor into a text to video generator model and providing (208) the generated sequence of traffic images for the ECU testing.

## Description

### FIELD OF THE INVENTION

The invention relates to the field of training of vehicle electronic control units, in particular the training of vehicle electronic control units using images.

### BACKGROUND

Training electronic control units (ECUs) for vehicles using images may use machine learning techniques to enable ECUs to perform such tasks as object recognition, the control of one or more components of a vehicle, or even autonomous driving. This process typically begins with collecting a vast dataset of vehicle-related images, such as road conditions, traffic signs, and various driving scenarios. These images are then annotated to highlight relevant features and objects. The annotated data is fed into neural networks, which are trained to recognize patterns and make decisions based on visual inputs. Through iterative training and validation, the ECUs learn to interpret and respond to real-world driving situations with increased accuracy and efficiency. This visual-based training improves the ECU's ability to support systems such as advanced driver assistance systems (ADAS), enhancing overall vehicle safety and performance.

### SUMMARY OF THE INVENTION

The invention provides for a method of testing an ECU, a vehicle testing system, and a computer program in the independent claims. Embodiments are given in the dependent claims.

In one aspect a method of testing an ECU is disclosed. The ECU comprises an automated control module adapted for controlling components of a vehicle. The method comprises receiving a collection of joint embedding space vectors. The joint embedding space vectors are each configured to encode a sensor data stream and a text scene descriptor. The sensor data stream comprises sequential traffic images. The text scene descriptor is descriptive of the sequential traffic images. The method further comprises receiving a selection of a joint embedding space vector different from the collection of joint embedding space vectors. The method further comprises receiving a generated text descriptor in response to inputting the selected joint embedding space vector into a joint embedding space vector decoder model. The joint embedding space vector decoder model is configured to output generated text descriptors descriptive of the collection of joint embedding space vectors in response to receiving the collection of joint embedding space vectors. The method further comprises receiving a generated sequence of traffic images in response to inputting the generated text descriptor into a text-to-video generator model. The method further comprises providing the generated sequence of traffic images for the ECU testing.

In another aspect, a vehicle testing system is disclosed. The vehicle testing system comprises a memory storing machine-executable instructions. The vehicle testing system further comprises a computational system. Execution of the machine-executable instructions causes the computational system to perform an example of the method.

In another aspect, a computer program is disclosed. The computer program comprises machine-executable instructions configured for causing a computational system to perform an example of the method.

### BRIEF DESCRIPTION OF THE DRAWINGS

In the following, examples are described in greater detail making reference to the drawings in which:
Fig. 1 illustrates an example of a vehicle testing system for testing an ECU.
Fig. 2 is a block diagram which illustrates a method of operating the vehicle testing system of Fig. 1.
Fig. 3 illustrates a further example of a vehicle testing system.
Fig. 4 is a block diagram which illustrates a method of operating the vehicle testing system of Fig. 3.
Fig. 5 illustrates a further example of a vehicle testing system.
Fig. 6 illustrates a further example of a vehicle testing system.

### DETAILED DESCRIPTION

In the following, similar elements are denoted by the same reference numerals.

In one aspect, disclosed is a method of testing an ECU. The method may, in various examples, be a computer-implemented method. An ECU refers to an electronic control unit. An ECU as used herein encompasses an automated control module adapted for controlling one or more components of a vehicle. The automated control module may for example be used to implement driver assistance or an automated driving program or other automated functionality for the vehicle. The components of the vehicle may represent different types of systems and levels of control in different examples. In some simpler examples, controlling the components of a vehicle may refer to controlling individual systems such as automatic braking or parking. Controlling components of a vehicle may also refer to providing automated driving or driver assistance to the operator of the vehicle.

The method comprises receiving a collection of joint embedding space vectors. A joint embedding space, as used herein, encompasses a shared mathematical space where different types of data are represented in a unified form. In this case, the joint embedding space vectors are each configured to encode a sensor data stream and a text scene descriptor. The text scene descriptor may be a text descriptor which describes a series of sequential traffic images as well as other conditions such as road conditions or other driving conditions such as moisture on the road or precipitation. The sensor data stream comprises sequential traffic images. In various other embodiments the sensor data stream may incorporate other information such as radar or LiDAR data or other sensor date acquired by a vehicle that are registered to or at the same time as the sequential traffic images. As was noted above, the text scene descriptor is descriptive of the sequential traffic images.

As mentioned above, a joint embedding space uses a shared vector representation for data from multiple modalities or domains (such as images and text, or speech and video) that are projected into a common vector space. In the examples herein, the multiple domains comprise the sensor data stream and the text scene descriptor. To create a joint embedding space an artificial intelligence model such as one or more neural networks are trained to map data from each domain into vectors in this shared space, where semantically similar items from different domains are located near each other. For example, an image of a car in the rain and an image depicting a car in the rain preferably have embeddings that are close in the joint embedding space. The training process often uses paired data (like image-caption pairs) and a loss function (like contrastive loss or triplet loss) to minimize the distance between embeddings of semantically similar pairs, while pushing apart embeddings of unrelated pairs. Techniques such as neural networks and transformations specific to each modality may be used to extract and align the meaningful features before projection into this space.

The method further comprises receiving a selection of a joint embedding space vector different from the collection of joint embedding space vectors. Each of the joint embedding space vectors represents a collection or set of data, which for example could be used for testing an ECU. The joint embedding space vector is different from the collection of joint embedding space vectors and may therefore represent a set of driving conditions which is not represented by the present collection of joint embedding space vectors.

The method further comprises receiving a generated text descriptor in response to inputting the selected joint embedding space vector into a joint embedding space vector decoder model. The joint embedding space vector decoder model is configured to output generated text descriptors descriptive of the collection of joint embedding space vectors in response to receiving the collection of joint embedding space vectors.

To create a joint embedding space vector decoder model that generates a text description from a vector in a joint embedding space, one may use a neural network architecture such as a transformer or recurrent neural network (RNN) with attention mechanisms. The joint embedding space vector, which represents a data point like an image, serves as the input to the decoder. The decoder's job is to map this high-dimensional vector back to a sequence of words that form a meaningful description. Training such a decoder involves using paired data (like an image and its corresponding caption), where the joint embedding vector is generated by an encoder. During training, the decoder learns to predict the next word in the sequence based on the current vector and the previous words. This is often achieved through techniques like teacher forcing, where the correct next word is provided during training to guide the learning process. The decoder is typically trained to minimize a loss function such as cross-entropy between the predicted and actual sequences, refining the model to generate coherent text descriptions from vectors.

The method further comprises receiving a generated sequence of traffic images in response to inputting the generated text descriptor into a text-to-video generator model. A text-to-video generator model may create videos from a given text description by learning a mapping from textual inputs to dynamic video outputs. This model typically uses a combination of natural language processing (NLP) techniques to encode the text input and computer vision techniques to generate video frames. The process starts with encoding the input text into a feature-rich vector using a transformer or another text encoder. This vector captures the semantic meaning of the description. Then, a video generator, often based on generative adversarial networks (GANs) or variational autoencoders (VAEs), generates a sequence of frames conditioned on the text encoding. These models may use recurrent structures or attention mechanisms to ensure temporal consistency between frames, simulating motion over time. The training involves aligning the textual descriptions with real video data so the model can learn to produce coherent, realistic videos that match the narrative described by the input text. Loss functions such as reconstruction loss or adversarial loss are commonly used to fine-tune the video quality and semantic alignment.

Several text-to-video generator models are available for use without requiring users to train them from scratch. One example is Runway ML's Gen-2, which allows users to generate short video clips from text descriptions via a web interface or API, making it accessible for non-experts. Another tool is Pika Labs, which also generates videos from text prompts and is ideal for simple, creative outputs. Both of these platforms abstract away the complexity of training, allowing users to input text and receive video results quickly.

Additionally, ModelScope's Text2Video-Zero is an open-source implementation available on platforms like Hugging Face. It uses pre-trained models to generate videos based on text inputs and provides easy access through code examples. Tools like Deep Dream Generator also offer video creation features, though more focused on artistic outputs using pre-trained models. These options provide an easy entry point for generating text-based videos without the need for prior training.

The method further comprises providing the generated sequence of traffic images for the ECU testing. This example may be beneficial because it provides a means of generating a valid generated sequence of traffic images for the ECU testing for particular driving conditions which are not represented in the collection of joint embedding space vectors. This may for example provide for additional data for testing the ECU which does not need to be generated by acquiring actual images.

In another example, providing the generated video sequence for the ECU testing comprises controlling a simulation program to test operation of the ECU using the generated sequence of traffic images. Providing the generated video sequence for the ECU testing further comprises detecting faults in the operation of the ECU during the controlling of the simulation program. For example, the ECU controls components of the vehicle. It can be detected if the controlling of the components of the vehicle were performed in an incorrect manner when the generated sequence of traffic images were used by the simulation program to test the operation of the ECU. This for example may enable testing a greater variety of driving or road conditions than are available with real or acquired data.

In another example, the method further comprises generating modification commands configured for modifying programming of the ECU using the detected faults. The method further comprises modifying the ECU using the modification commands. For example, when a fault is detected in the operation of the ECU this may be used to fine-tune or change settings in the ECU. This may for example be particularly useful when the ECU comprises an artificial intelligence component such as a neural network. The modification commands may for example be instruction to use the generated sequence of traffic images for performing deep learning on the artificial intelligence component of the ECU. In other examples, it may be used to fine-tune or adjust various software parameters which are used to control or configure the ECU.

In another example, the method further comprises determining the selected joint embedding space vector by interpolating two of the collection of joint embedding space vectors. The interpolation of the two joint embedding space vectors may provide for a joint embedding space vector which represents an intermediate set of road conditions and images to the two joint embedding space vectors. This may for example provide a means of generating the generated sequence of traffic images for road conditions for which no examples exist. This may be a very effective means of generating synthetic data for training or modifying the ECU.

In another example, the method further comprises receiving a selection of an existing vector of the collection of joint embedding space vectors. The selected joint embedding space vector is located within a predetermined distance of the existing vector. This may for example provide a means of generating more training data that is similar to the existing vector. For example, if there is a shortage of training data for the ECU that is similar to the existing vector, then examples may be used to generate the sequence of traffic images for similar conditions. This may be very useful when it is impossible or difficult to obtain training data similar to existing sets of training data.

In some examples, the distance between two vectors in the joint embedding space may be defined in terms of a norm or within a predefined boundary. This may be an effective means of defining the distance to the existing vector.

In another example, the sensor data stream further comprises a sequence of radar data synchronized to and descriptive of the sequential traffic images. Including the radar data in the joint embedding space vectors may have a significant effect on the joint embedding space. This may provide for a large amount of regularization between the various vectors. This may, for example, enable the interpolation between the two of the collection joint embedding space vectors to provide a more accurate mix of the road conditions for the two of the collection of joint embedding space vectors.

In another example, the sensor data stream further comprises a sequence of LiDAR data synchronized to and descriptive of the sequential traffic images. Like the radar data, the LiDAR data may have an effect on the regularization of the joint embedding space. This may cause the collection of joint embedding space vectors to have similar conditions, be more spatially correlated and may for example result in the interpolation of the two of the collection of joint embedding space vectors to be more successful.

In another example, the method further comprises receiving a generated open scenario description of the generated sequence of traffic images in response to prompting a large language model with the selected joint embedding space vector. The method further comprises providing the generated open scenario description for the ECU testing. This may be beneficial because it may provide an effective means of controlling the ECU during its simulated testing.

An open scenario description for training electronic control units (ECUs) in vehicles refers to a standardized, flexible framework used to define various driving scenarios that an ECU might encounter in real-world environments. This type of description typically includes details about road layouts, traffic conditions, environmental factors (like weather or lighting), and interactions with other vehicles or pedestrians. By using open scenario descriptions, developers can simulate and test how ECUs will respond to complex and dynamic driving situations without needing to program each scenario manually. The open scenario description may in some examples be formatted as an XML file.

In another example, the method further comprises testing if the generated open scenario meets a predetermined validity criteria. The predetermined validity criteria comprise any one of the following: having a valid XML structure, comprising a sequence of traffic events, the traffic events are specified by parameters within a predetermined range of values, and combinations thereof. The method further comprises rejecting the generated sequence of traffic images if the generated open scenario fails to meet the predetermined criteria. This may be an effective means of ensuring that the generated sequence of traffic images and the generated open scenario represent a valid test case which may be used for training and modifying the ECU.

In another example, the text scene descriptor is formulated as an open scenario descriptor of the sensor data stream. The large language model is fine-tuned to generate open scenario descriptions from joint embedding space vectors using the text scene descriptor of the joint embedding space vectors. This may provide an improved means of providing for the testing of the ECU using the generated sequence of traffic images.

To fine-tune a large language model (LLM) to produce open scenario descriptions using the same text used to control a text-to-video generator, one may start by gathering a dataset that includes paired examples of the text prompts and corresponding scenario descriptions. This data would represent the specific language structure and details required in open scenario descriptions, such as vehicle behavior, environmental conditions, and traffic interactions. The LLM, pre-trained on general language tasks, is then fine-tuned using this dataset, typically through supervised learning. During fine-tuning, one may adjust the model's weights to align its output with the specific requirements of scenario descriptions, ensuring it generates precise and structured content related to vehicle control contexts. The loss function could measure how well the model predicts the correct scenario descriptions, and through iterative training, the model would learn to produce structured, realistic open scenarios from text prompts initially designed for generating video content.

In another example, the joint embedding space vector decoder model is implemented using a sequence-to-sequence architecture.

To implement a joint embedding space vector decoder model using a sequence-to-sequence (seq2seq) architecture, one may use an encoder that transforms the input data (such as an image or multimodal content) into a shared embedding vector within the joint embedding space as was describe above. This embedding represents features of the input across different domains. The decoder part of the seq2seq architecture is then tasked with generating a sequence of outputs, such as a text description, from this embedding vector. Typically, the decoder consists of a recurrent neural network, a long short-term memory network, or a transform decoder.

In various examples, the sequence-to-sequence architecture may be implemented using a recurrent neural network, a long short-term memory network, a transform decoder, and combinations thereof. These may all form an effective means of performing the translation of the text.

During training, the sequence-to-sequence model may be trained to predict the next word in a sequence based on both the current embedding vector and the previously generated words. Techniques like teacher forcing are used to guide the training by providing the actual next word during early stages. Over time, the model learns to decode the joint embedding vector into a coherent sequence, such as a text description, making it an effective tool for tasks like image captioning or text generation from multimodal inputs.

In another example, the text-to-video generator model is implemented using any one of the following: a latent diffusion model, a GAN, and a variational autoencoder, and combinations thereof. An advantage of methods is that the text-to-video generator model need not be specifically trained for the particular domain of generating the sequence of traffic images. A generalized model may be controlled effectively.

In another example, providing the generated sequence of traffic images for the ECU testing comprises adding the generated sequence of traffic images to an image sequence library designated for the ECU testing. Instead of using it for training a particular ECU immediately, the generated sequence of traffic images may be added to a library, which may be used for training multiple types of ECUs as well as repeatedly training the same ECU during fine-tuning of its operation and programming.

In another aspect, disclosed is a vehicle testing system disclosed. The vehicle testing system comprises a memory storing machine-executable instructions and a computational system. Execution of the machine-executable instructions further causes the computational system to perform an example of a method as disclosed above.

In a vehicle, various types of electronic control units (ECUs) which may be implemented to manage different functionalities, ranging from essential operations to advanced driver assistance systems. Some example ECUs include those for Driver Assistance Systems, such as Adaptive Cruise Control (ACC) and Lane-Keeping Assist (LKA), which help improve safety and comfort. Additionally, Automated Driving Systems (ADS) ECUs manage more complex tasks, such as autonomous navigation, object detection, and decision-making in self-driving cars. Each ECU may communicate with others via in-vehicle networks like CAN bus to ensure coordinated vehicle operations.

In another aspect, disclosed is a computer program comprising machine-executable instructions which is configured for causing the computational system to perform an example of the method as described above.

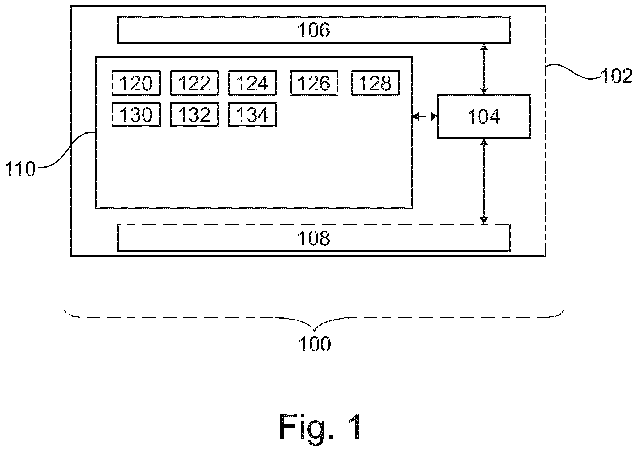

Fig. 1 illustrates an example of a vehicle testing system 100. The vehicle testing system 100 is shown as comprising a computer 102. The computer 102 is intended to represent one or more computers located at one or more locations. The computer 102 comprises a computational system 104. Likewise, the computational system 104 is intended to represent one or more computational systems or computing cores located at one or more locations. The computational system 104 is shown as being in communication with an optional hardware interface 106 and an optional user interface 108. The hardware interface 106 may enable the computational system 104 to communicate with other components of the vehicle testing system 100 if they are present. The user interface 108 may enable a user or operator to control the operation and function of the vehicle testing system 100.

The computational system 104 is shown as being in further communication with a memory 110. The memory 110 is intended to represent various types of memory which may be accessible to the computational system 104. The memory 110 is shown as containing machine-executable instructions 120 that enable the computational system 104 to provide various data processing and numerical tasks.

The memory 110 is further shown as containing a collection of joint embedding space vectors 122. The joint embedding space vectors 122 are configured to encode a sensor data stream and a text scene descriptor. The sensor data stream comprises sequential traffic images. The text scene descriptor is descriptive of the sequential traffic images.

The memory 110 is further shown as containing a selection of a joint embedding space vector 124 that is different from the collection of joint embedding space vectors 122. The memory 110 is further shown as containing a joint embedding space vector decoder model 126 that is able to receive a joint embedding space vector 124, 122 and then generate a text descriptor 128. The memory 110 is shown as containing a text descriptor 128 that was generated by inputting the selection of the joint embedding space vector 124 into the joint embedding space vector decoder model 126. The memory 110 is further shown as containing a text-to-video generator model 130. The memory 110 is further shown as containing a generated sequence of traffic images 132 that was received in response to inputting the text descriptor 128 into the text-to-video generator model 130.

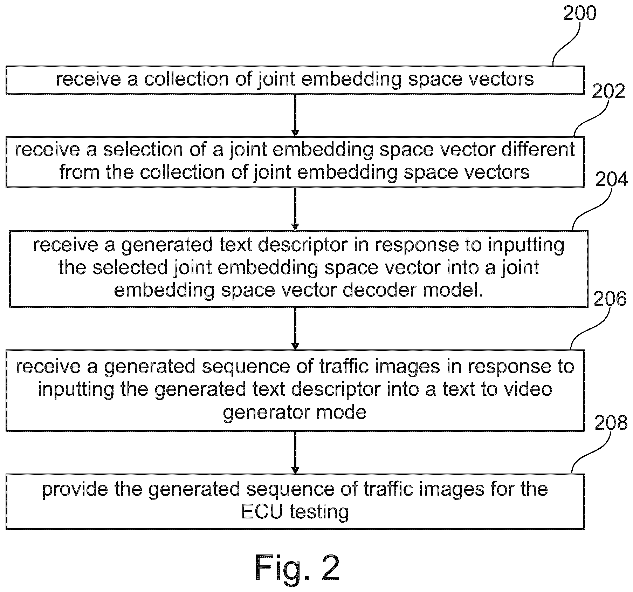

Fig. 2 shows a flowchart which illustrates a method of operating the vehicle testing system 100 of Fig. 1. In step 200, the collection of joint embedding space vectors 122 is received. In step 202, the selection of the embedding space vector 124 is received and this vector 124 is different from the collection of joint embedding space vectors 122. In step 204, the generated text descriptor 128 is received in response to inputting the selection of the joint embedding space vector 124 into the joint embedding space vector decoder model 126. Then, in step 206, the generated sequence of traffic images 132 is received in response to inputting the generated text descriptor 128 into the text-to-video generator model 130. In step 208, the generated sequence of traffic images 132 is provided for the ECU testing. This may include such things as using it directly for testing the ECU or it may mean for example, storing it in an image sequence library 134.

The memory 110 is additionally shown as containing an optional image sequence library 134 which may be used to store image sequences for the testing of an ECU. For example, it may contain a large number of generated sequences of traffic images 132 that is repeatedly generated with different text descriptors that are then stored in the image sequence library 134 for future use in ECU testing.

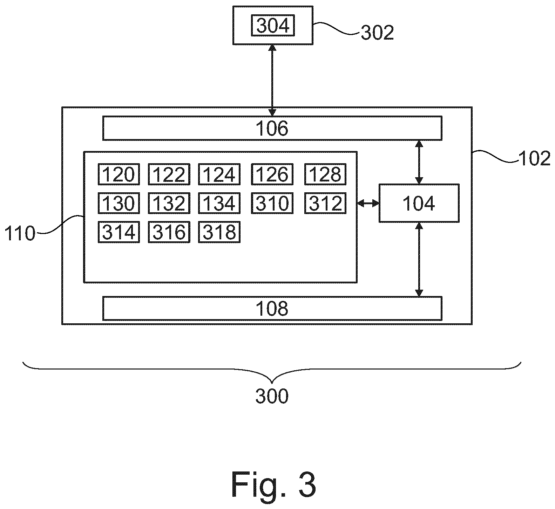

Fig. 3 illustrates a further example of a vehicle testing system 300. In this case, the hardware interface 106 is in communication with an ECU 302. The ECU 302 implements an automated control module 304 that is configured for controlling a portion or some components of a vehicle. For example, it may be an automated driving system or a driver assistance module. This is an example of a hardware-in-the-loop configuration. The ECU 302 could also be simulated instead of having the hardware interface 106 talk to a physical module.

The memory 110 is shown as additionally containing a simulation program 310. This is able to send signals and communicate with the ECU 302 to simulate a driving or control operation. The memory 110 is shown as containing some detected faults 312 that occurred when using the simulation program 310 in conjunction with the second sequence of traffic images 130 with the image labels 126. These for example may be faults 312 where the automated control module 304 made incorrect control decisions or failed to identify objects and correctly make image labels for the second sequence of traffic images 128 itself. The memory 110 is further shown as containing modification commands 314 that are used to modify or update the automated control module 304. For example, the detected faults 312 could be used as training data and the modification commands 314 are commands used to modify the automated control module 304 using this training data 312.

The memory 110 is further shown as containing an optional large language model 316. The large language model 316 has been fine-tuned to generate open scenario descriptions from when the text scene descriptor of the joint embedding space vector is input into it. The memory 110 is shown as optionally containing the generated open scenario description 318 that was received in response to inputting the generated text descriptor 128 into the large language model 316. The generated open scenario description 318 could be used by the simulation program 310 during the presentation of the generated sequence of traffic images 132. The generated open scenario description 318 may therefore be used to at least partially control the simulation program 310.

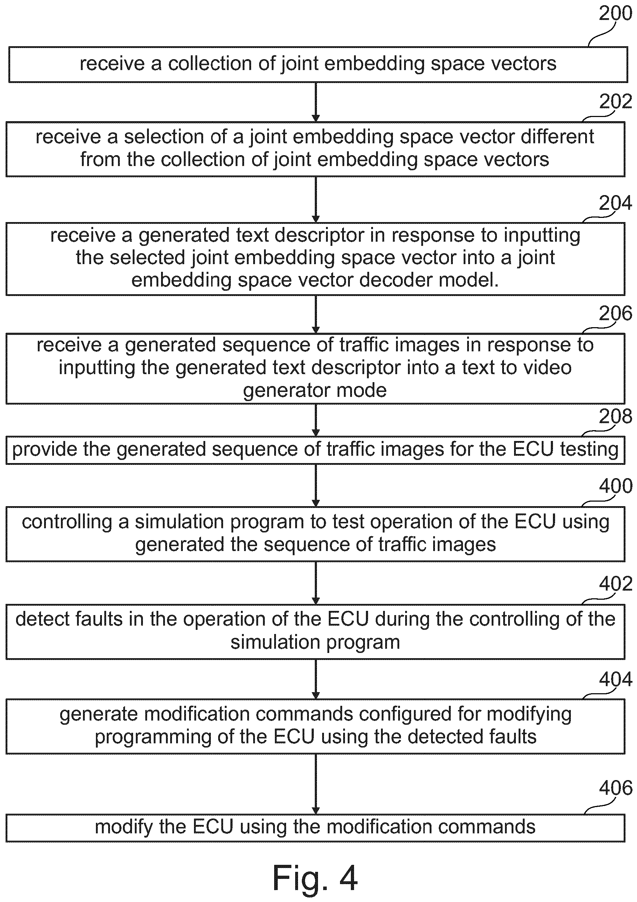

Fig. 4 shows a flowchart which illustrates a method of using the vehicle testing system 300 of Fig. 3. Steps 200, 202, 204, 206, and 208 are performed as was illustrated in Fig. 2. In step 400, the simulation program 310 is controlled to test the operation of the ECU 302 using the generated sequence of traffic images 132. In some optional examples, the generated open scenario description 318 may be used to control the simulation program 310 during this testing. In step 402, the faults 312 are detected when controlling the ECU 302 with the simulation program 310. In step 404, the modification commands 314 are generated and are configured for modifying the programming of the ECU 302 using the detected faults 312. In step 406, the ECU 302 is modified or its program is modified using the modification command 314.

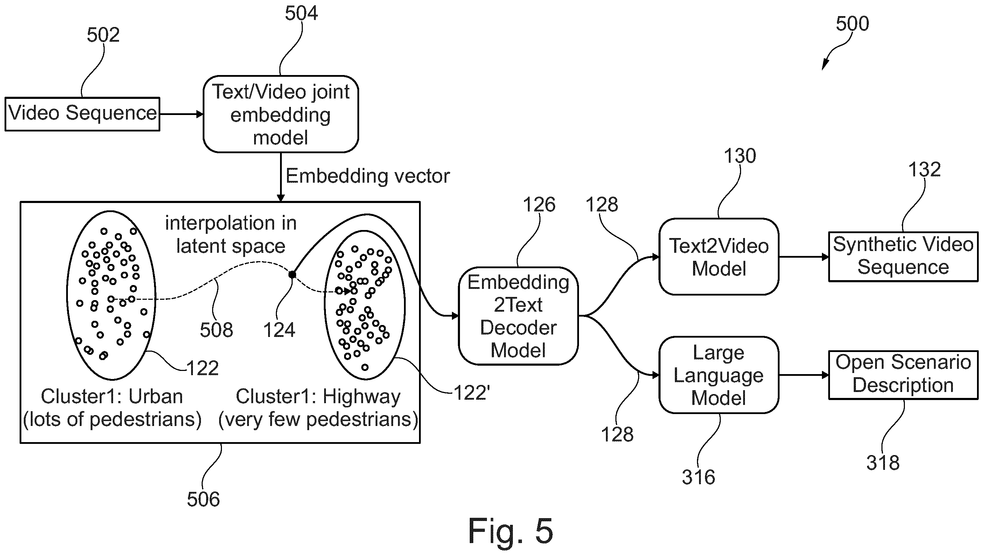

Fig. 5 illustrates a functional illustration of a vehicle testing system 500. Several different things are illustrated in this example. Firstly, there is an arbitrary generated sequence of traffic images 502 that is input into a text and video joint embedding model 504. This may also be input with the text descriptor of the example sequence of traffic images 502 to produce an embedding vector, which is then added to the joint embedding space 506. Within the joint embedding space there are two collections 122, 122' of joint embedding space vectors.

Collection 122 represents an urban environment where there are a large number of pedestrians and cluster 122' represents a highway where there are very few pedestrians. However, it may be desired to have a testing situation where there are a moderate number of pedestrians instead. To achieve this, there is a path 508 between two of the joint embedding vectors. Along this path the selection of the joint embedding space vector 124 is selected. For example, it may be an interpolation. The selected joint embedding space vector 124 is then input into a joint embedding space vector decoder model 126. This produces a generated text descriptor 128 that is input into the text-to-video generator model 130 and the large language model 316. The text-to-video generator model 130 outputs the generated sequence of traffic images 132 and the large language model 316 outputs the generated open scenario description 318. In some instances, only the generated sequence of traffic images 132 is desired. However, the combination of the generated sequence of traffic images 132 and the generated open scenario description 318 may for example be used by the simulation program 310 as illustrated in Fig. 3, to test the ECU 302.

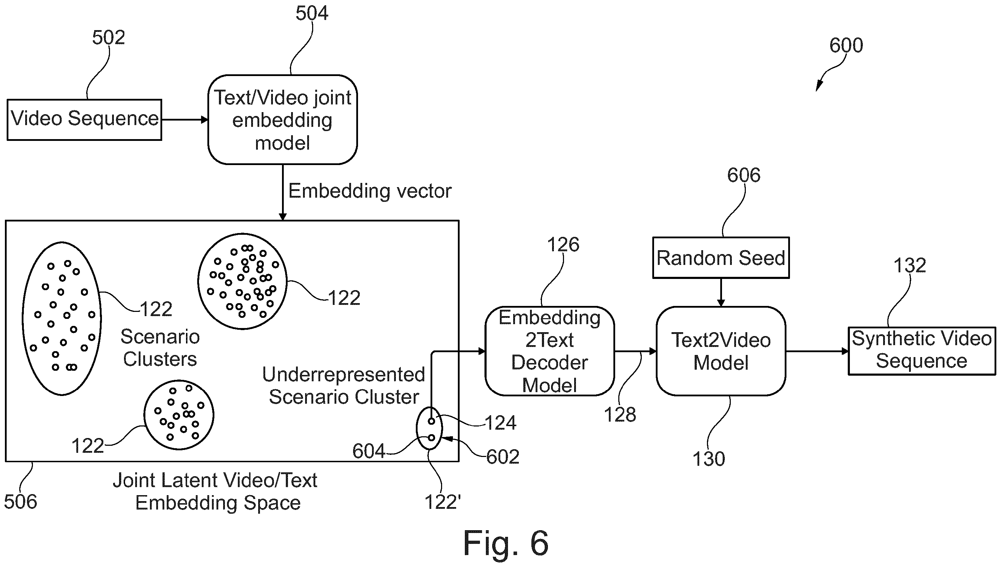

Fig. 6 illustrates a further implementation of a vehicle testing system 600. In this example, the joint embedding space 506 has four different collections 122, 122' of joint embedding space vectors. The joint embedding space vector 122' has many fewer points than the other joint embedding space vectors 122. In this example there is a boundary 602 which represents a predetermined distance from an existing joint embedding space vector 604. By choosing the selection of the joint embedding space vector 124 from within the boundary 602, the selected joint embedding space vector 124 has properties or driving conditions similar to the existing joint embedding space vector 604. The selected joint embedding space vector 124 is then input into the joint embedding space vector decoder model 126 which then outputs the generated text descriptor 128 which is input into the text-to-video generator model 130. This then results in the generated sequence of traffic images 132 which may be used for testing the ECU 302. An optional addition is the use of a random seed 606 that is input into the text-to-video generator model 130. This may for example help to obtain better differentiation between the scenarios represented by the selected joint embedding space vector 124 and the existing joint embedding space vector 604.

While the invention has been illustrated and described in detail in the drawings and foregoing description, such illustration and description are to be considered illustrative or exemplary and not restrictive; the invention is not limited to the disclosed examples.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

### REFERENCE SIGNS LIST

- 100: vehicle testing system
- 102: computer
- 104: computational system
- 106: optional hardware interface
- 108: optional user interface
- 110: memory
- 120: machine executable instructions
- 122: collection of joint embedding space vectors
- 122': collection of joint embedding space vectors
- 124: selection of joint embedding space vector
- 126: joint embedding space vector decoder model
- 128: generated text descriptor
- 130: text to video generator model
- 132: generated sequence of traffic images
- 134: image sequence library
- 200: receiving a collection of joint embedding space vectors, wherein the joint embedding space vectors are each configured to encode a sensor data stream and a text scene descriptor
- 202: receiving a selection of a joint embedding space vector different from the collection of joint embedding space vectors
- 204: receiving a generated text descriptor in response to inputting the selected joint embedding space vector into a joint embedding space vector decoder model
- 206: receiving a generated sequence of traffic images in response to inputting the generated text descriptor into a text to video generator model
- 208: providing the generated sequence of traffic images for the ECU testing
- 300: vehicle testing system
- 302: ECU
- 304: automated control module
- 310: simulation program
- 312: detected faults (training data)
- 314: modification commands
- 316: large language model
- 318: generated open scenario description
- 400: controlling a simulation program to test operation of the ECU using generated the sequence of traffic images
- 402: detect faults in the operation of the ECU during the controlling of the simulation program
- 404: Generate modification commands configured for modifying programming of the ECU using the detected faults
- 406: modify the ECU using the modification commands
- 500: vehicle testing system
- 502: example sequence of traffic images
- 504: text/video joint embedding model
- 506: joint embedding space
- 508: path in joint embedding space
- 600: vehicle testing system
- 602: boundary indicating predetermined distance from
- 604: existing joint embedding space vector

## Claims

1. A method of testing an ECU (302), wherein the ECU comprises an automated control module (304) adapted for controlling components of a vehicle, wherein the method comprises:
- receiving (200) a collection of joint embedding space vectors (122, 122'), wherein the joint embedding space vectors are each configured to encode a sensor data stream and a text scene descriptor, wherein the sensor data stream comprises sequential traffic images, wherein the text scene descriptor is descriptive of the sequential traffic images;
- receiving (202) a selection of a joint embedding space vector (124) different from the collection of joint embedding space vectors,
- receiving (204) a generated text descriptor (128) in response to inputting the selected joint embedding space vector into a joint embedding space vector decoder model, wherein the joint embedding space vector decoder model is configured to output generated text descriptors descriptive of the collection of joint embedding space vectors in response to receiving the collection of joint embedding space vectors;
- receiving (206) a generated sequence of traffic images (132) in response to inputting the generated text descriptor into a text to video generator model; and
- providing (208) the generated sequence of traffic images for the ECU testing.

2. The method of claim 1, wherein providing the generated video scene for the ECU testing comprises:
- controlling (300) a simulation program (310) to test operation of the ECU using the generated sequence of traffic images; and
- detect (302) faults (312) in the operation of the ECU during the controlling of the simulation program.

3. The method of claim 2, wherein the method further comprises:
- generate (304) modification commands (314) configured for modifying programming of the ECU using the detected faults; and
- modify (306) the ECU using the modification commands.

4. The method of any one of claims 1, 2, or 3, wherein the method further comprises determining the selected joint embedding space vector by interpolating two of the collection of joint embedding space vectors.

5. The method of any one of claims 1, 2 or 3, wherein the method further comprises receiving a selection of an existing vector of the collection of joint embedding space vectors, wherein the selected joint embedding space vector is located with a predetermined distance of the existing vector.

6. The method of any one of the preceding claims, wherein the sensor data stream comprises a sequence of RADAR data synchronized to and descriptive of the sequential traffic images.

7. The method of any one of the preceding claims, wherein the sensor data stream comprises a sequence of LIDAR data synchronized to and descriptive of the sequential traffic images.

8. The method of any one of the preceding claims, wherein the method further comprises:
- receiving a generated open scenario description (318) of the generated sequence of traffic images in response to prompting a large language model (316) with the selected joint embedding space vector; and
- provide the generated open scenario description for the ECU testing.

9. The method of claim 8 further comprising:
- testing if the generated open scenario meets a predetermined validity criteria, wherein the predetermine validity criteria comprises any one of the following: having a valid XLM structure, comprising a sequence of traffic events, wherein the traffic events are specified by parameters within a predetermined range of values, and combinations thereof; and
- rejecting the generated sequence of traffic images if the generated open scenario fails to meet the predetermined criteria.

10. The method of claim 8 or 9, wherein the text scene descriptor is formatted as an open scenario description of the sensor data stream, wherein the large language model is fine tuned to generate open scenario descriptions from joint embedding space vectors using the generated text scene descriptor of the joint embedding space vectors.

11. The method of any one of the preceding claims, wherein the joint embedding space vector decoder model is implemented using a sequence-to-sequence architecture, that is preferably implemented using any one of the following: a recurrent neural networks, a long short-term memory networks, a transformer decoder, and combinations thereof.

12. The method of any one of the preceding claims, wherein the text to video generator model is implemented using any one of the following: a latent diffusion model, a GAN, a variational autoencoder, and combinations thereof.

13. The method of any one of the preceding claims, wherein providing the generated sequence of traffic images for the ECU testing comprises adding the generated sequence of traffic images to an image sequence library designated for the ECU testing.

14. A vehicle testing system (100, 300) comprising:
- a memory (110) storing machine executable instructions (120); and
- a computational system (104), wherein execution of the machine executable instructions causes the computational system to perform the method of any one of claims 1 through 13.

15. A computer program comprising machine executable instructions (120) configured for causing a computational system (104) to perform the method of any one of claims 1 through 13.
